# EUROPEAN PATENT SPECIFICATION

(11) **EP 0 498 298 B1**
(45) Date of publication and mention of the grant of the patent: **22.03.1995**
(21) Application number: 92101519.4
(22) Date of filing: 30.01.1992
(51) Int. Cl.: G01P 3/44, G01P 1/02

(54) **A protective housing for a sensor mounted in a bearing, with a cable delivering appendix and connector**
Schutzgehäuse für einen in einem Lager montierten Messaufnehmer, mit Kabeleinführungsansatz und -verbinder
Un logement de protection pour un capteur monté dans un palier, avec un appendice pour le guidage d'un câble et un connecteur

(30) Priority: 08.02.1991 IT TO910034 U
(43) Date of publication of application: 12.08.1992
(73) Proprietor: SKF INDUSTRIE S.P.A., I-10123 Torino (IT)
(72) Inventor: Vignotto, Angelo, I-10134 Torino (IT); Genero, Matteo, I-10021 Cambiano, Torino (IT); Moretti, Roberto, I-10020 Cambiano, Torino (IT)
(74) Representative: Lotti, Giorgio

(56) References cited:
- EP-A- 0 376 771
- EP-A- 0 378 939
- EP-A- 0 401 464
- EP-A- 0 487 405
- FR-A- 2 133 955

## Description

This invention relates to a protective shell with an appendix for delivering cables of devices for gauging the revolving speed between the races of a wheel bearing.

High precision gauging systems of the kind known as ABS, that are usually located near the races of a bearing, are ordinarily equipped with basic components. The main components are a phonic wheel, a gauging sensor, a local processing unit and a oleodynamic shunt connection unit.

Since these are high precision systems, they have to be provided with protection devices that guarantee correct operation. Heretofore the basic components must be kept in a steady and correct position, and the electric parts ought to have efficient connections.

All parts have to be protected from external polluting agents so as to ensure the gauging device good operation in time.

EP-A-376771 discloses a rotational speed gauging device fitted to a ball bearing. A sensor facing a multipolar magnetic ring is contained in an annular shell mounted to the fixed race of a bearing. The shell is provided with a radially projecting appendix for the electrical connection of the sensor with the processing unit.

EP-A-401464 discloses a protective shell which is secured to the stationary race of a bearing and which comprises a cable connector for delivering signals to a processing unit. The connector may be open in the axial direction or at any specified angle to the axial direction.

EP-A-487405, published on 27.05.92, on later date than the priority date of the present application, discloses an annular housing carrying a sensor. The housing is mounted frontally on the fixed race of the bearing. An appendix projects radially from the housing and is provided with an axially disposed connector.

It is a general object of the present invention to provide a device that is capable of satisfying the protection and steadiness requirements of the interested parts, with particular attention for the electric connection between the gauging sensor and the local processing unit, so that the cable housing acts as a strong and protective shell with respect to the environment.

With the above and other objects in view which will appear as the description proceeds, this invention resides in a novel construction, combination and arrangement of parts substantially as hereinafter described and more particularly defined by the appended claims, it being understood that such changes in the precise embodiment of the herein disclosed invention may be made as come within the scope of the claims.

The accompanying drawings illustrate one complete example of a preferred embodiment of the invention constructed according to the best mode so far devised for the practical application of the principles thereof, and in which:
- fig. 1: is a radial sectional view of a rolling contact bearing for the wheel hub of a vehicle equipped with the protective shell of this invention;
- fig. 2: is a fragmentary sectional view, on a larger scale, of a detail in fig. 1;
- fig. 3: is a side view of the shell as seen according to arrow A of fig. 1.

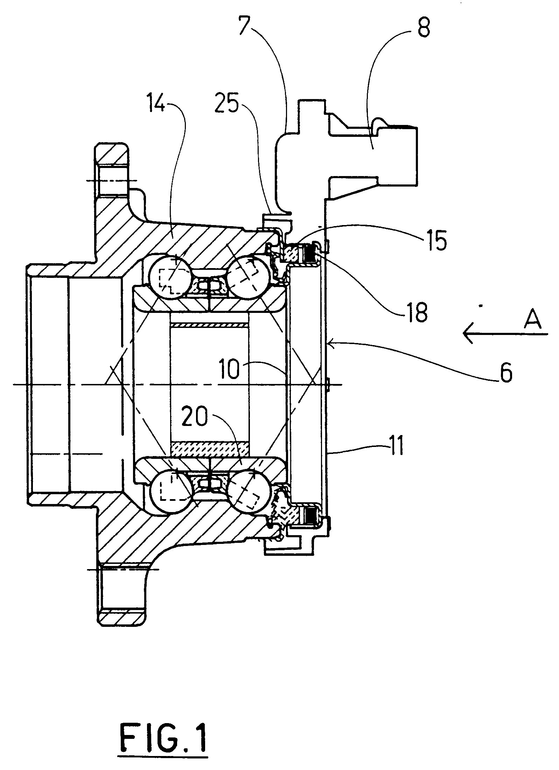

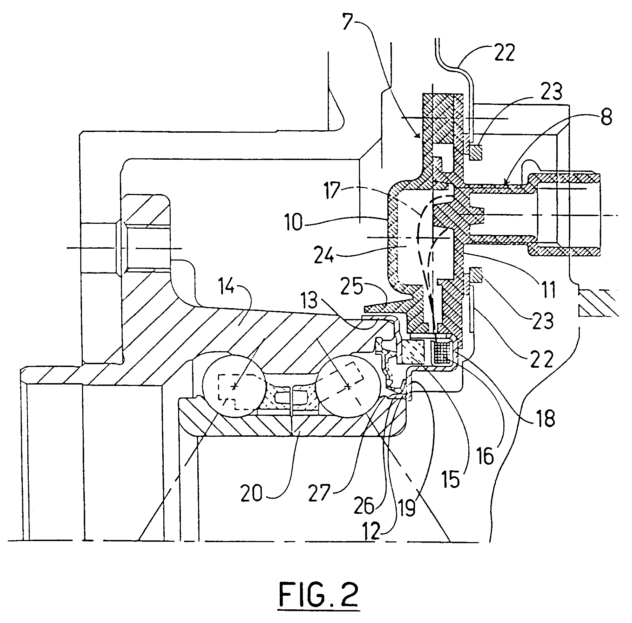

Referring now more particularly to the accompanying drawings, in figures 1 and 2 the protective shell of this invention is formed by a substantially annular shaped body 6, fitted with a radial appendix 7 that is on turn provided with an axially disposed connector 8. The body 6 is represented by the whole formed by an outer half-shell 10 and an inner half-shell 11, that both have a substantially annular shape and diametrical cross section which are so shaped as to be steadily secured to the fixed part of the bearing and to contain and protect the gauging sensor and the cables leaving therefrom.

Referring to fig. 2, a rigid shield 13 is fixed to the outer rotating race 14 of the bearing. The shield 13 carries a phonic wheel 15 that revolves together with outer race 14.

A gauging coil 16 facing the race 14 is electrically connected to local processing unit (not shown in the drawings) through cables 17.

The coil 16 is arranged wihtin a ring 18 with a C shaped cross section, that is integral with shield 19. The latter is in turn mounted on the inner fixed race 20 of the bearing by means of a circular appendix 12. This appendix is fixed on a notch 26 expressly obtained for receiving the appendix 12 of shield 19. The notch 26 ends with a relief 27 that locks screen 19 axially.

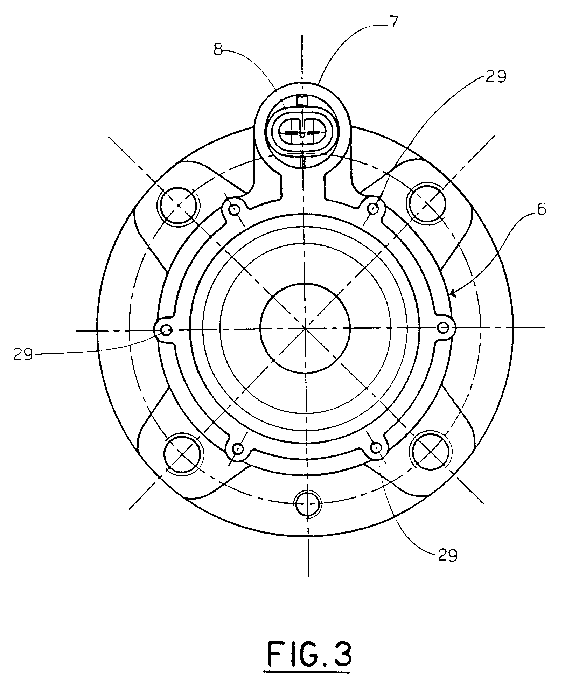

The connector 8, substantially cylindrical in shape with a horizontal axis, is obtained as a whole with the outer half-shell 11 in correspondence of the radial appendix 7. The cables 17 leading to the local processing unit are inserted through said connector. The inner half-shell 11 is mounted on the race 18 along its circumference and is secured both axially and radially by a fixed shield 22. The locking action is improved by means of a rubber washer 23, so as to prevent the shield 22 from transmitting vibrations to the half-shell 11, and by peripheral pins. 29 (figure 3) that unite the two half-shells and secure them to shield 22.

The outer half-shell 10 faces the inner half-shell 11 and is connected thereto as stated hereinabove. In correspondence of the appendix 7, the central part of the outer half-shell is externally convex so as to define a groove 24 meant to facilitate the passage of the cables 17 in the connector 8 and protect them. A tongue 25 projects externally from the half-shell 10 for protecting the phonic wheel 15. As for the half-shell 11, also the outer one 10 is fixed to the ring 18, surrounding it along the whole of its circumference. Two rubber washers (not shown) are so secured inside groove 24 in correspondence of the inlet of cables 17 in appendix 7 as to guarantee the sealing at the inside of said groove and of the connector 8.

As it can be appreciated, the characteristics of the shell offer two principal advantages:
1) the shell forms a housing for the cables, protecting them from vibrations, high temperatures and external polluting agents that could compromise good operation;
2) the shell is a rigid member that cooperates in preventing the ring 18 from deformation.

As a matter of fact, such ring should maintain its own original arrangement without altering the reciprocal position between the gauging coil 16 therein fitted and the rotating phonic wheel that is facing it.

The shell of this invention has moreover the advantage of comprising the connector as an integral part, therefore reducing costs and time during assembling.

A device for gauging the revolving speed of the races which is provided with the protective shell hereinabove described will be highly reliable and precise for a longer time.

The embodiment shown in the drawings is not the only one possible. The shell can also be made as a whole instead of realizing two pieces to be jointed later, acheiving the same advantages offered by the embodiment shown in the drawings.

## Claims

1. A protective shell for devices for gauging the revolving speed between the races of a vehicle hub bearing, formed by a body (6) having a substantially annular shape, frontally mounted to the stationary race (20) of the bearing and facing a phonic wheel (15) mounted on the rotating race (14) of the bearing, said body (6) being provided with an appendix (7) that projects radially from the body (6) and guides the cables connecting the sensor (16) of said gauging device and a local processing unit characterized in that the surface of the annular body (6) facing the inner part of the vehicle is adapted to rest upon a fixed ring (18) that carries the gauging sensor (16) and to be secured both axially and radially by means of a radially outwardly extending rigid shield (22) integral with the inner fixed race (20) of the bearing; the surface of the annular body (6) facing the outer part of the vehicle is adapted to rest on the same fixed ring (18) carrying the gauging sensor (16) and is provided with a convex portion determining a groove (24) comprised between said surfaces intended for receiving said cables (17); said groove (24) being located in correspondence with said appendix (7), said appendix being further provided with an axially disposed connector (8) providing electrical connection between a coil (16) of the gauging sensor and the vehicle's local processing unit.

2. A shell according to claim 1, characterized in that the annular body (6) is provided with a tongue (25) projecting outwardly proximate to the rotating race (14) of the bearing for protecting said speed gauging device. device.

3. A shell according to claim 1, characterized in that it is formed by two half-shells (10, 11), preferably made out of plastic material, of which the innermost (11), the radial appendix (7) and the axial connector (8) form an solid unit.

4. A shell according to claim 1, characterized in that the annular body (6), the radial appendix (7) and the axial connector (8) are made in one pressed piece.

## Patentansprüche

1. Schutzgehäuse für Einrichtungen zum Messen der Drehzahl zwischen den Lagerringen eines Fahrzeugradnabenlagers, das durch einen Körper (6) gebildet wird, der eine im wesentlichen ringförmige Form aufweist, der stirnseitig an dem stationären Lagerring (20) des Lagers befestigt ist und der einem phonischen Rad (15) gegenüberliegt, das an dem rotierenden Lagerring (14) des Lagers befestigt ist, wobei der Körper (6) mit einem Ansatz (7) versehen ist, der radial von dem Körper (6) vorsteht und die Leitungen führt, die den Sensor (16) der Meßvorrichtung mit einer lokalen Prozessoreinheit verbindet, dadurch gekennzeichnet, daß die Oberfläche des ringförmigen Körpers (6), die dem inneren Teil des Fahrzeuges gegenüberliegt, so angepaßt ist, um auf einem befestigten Ring (18), der den Sensor (16) zum Messen trägt, zu verharren, und um in beiden Richtungen - axial und radial - mittels einer sich radial nach außen erstreckenden, starren Abschirmung (22) gesichert zu sein, die einstückig mit dem inneren, stationären Lagerring (20) des Lagers ausgebildet ist; daß die Oberfläche des ringförmigen Körpers (6), die dem äußeren Teil des Fahrzeuges gegenüberliegt, angepaßt ist, um auf demselben befestigten Ring (18) zu verharren, der den Sensor (16) zum Messen trägt und die mit einem konvexen Abschnitt versehen ist, der eine Nut (24) bestimmt, die zwischen den Oberflächen enthalten ist, die zum Aufnehmen der Kabel (17) vorgesehen sind; daß die Nut (24) in Übereinstimmung mit dem Ansatz (7) plaziert ist, wobei der Ansatz weiterhin mit einem axial angeordneten Verbinder (8) versehen ist, der die elektrische Verbindung zwischen einer Spule (16) des Meßsensors und der lokalen Prozessoreinheit des Fahrzeuges zur Verfügung stellt.

2. Schutzgehäuse nach Anspruch 1, dadurch gekennzeichnet, daß der ringförmige Körper (6) mit einer Zunge (25) versehen ist, die sich nach außen bis ungefähr zu dem rotierenden Lagerring (14) des Lagers erstreckt, um die Drehzahlmeßvorrichtung zu schützen.

3. Schutzgehäuse nach Anspruch 1, dadurch gekennzeichnet, daß es durch zwei Gehäusehälften (10, 11) gebildet wird, die bevorzugterweise aus einem Kunststoffmaterial hergestellt sind, von denen die innerste Gehäusehälfte (11), der radiale Ansatz (7) und der axiale Verbinder (8) eine starre Einheit bilden.

4. Schutzgehäuse nach Anspruch 1, dadurch gekennzeichnet, daß der ringförmige Körper (6), der radiale Ansatz (7) und der axiale Verbinder (8) als ein gepreßtes Teil hergestellt sind.

## Revendications

1. Coquille de protection pour un dispositif de mesure de la vitesse de rotation entre les bagues d'un palier de roulement du moyeu d'un véhicule, formée par un corps (6) de forme substantiellement annulaire, monté par-devant la bague fixe (20) du palier et situé en regard d'une roue phonique (15), elle-même montée sur la bague tournante (14) du palier, ledit corps (6) étant pourvu d'un appendice (7) qui fait saillie du corps (6) de façon radiale et guide les câbles raccordant le capteur (16) dudit dispositif de mesure à une unité locale de traitement, caractérisée en ce que la surface du corps annulaire (6) située en regard de la partie intérieure du véhicule est adaptée pour prendre appui sur une bague fixe (18) qui porte le capteur de mesure (16) et pour être fixée de manière à la fois axiale et radiale, par l'intermédiaire d'un écran protecteur rigide (22) solidaire de la bague intérieure fixe (20) du palier ; la surface du corps annulaire (6) située en regard de la partie extérieure du véhicule est adaptée pour prendre appui sur la même bague fixe (18) portant le capteur de mesure (16), et elle est pourvue d'une portion convexe déterminant une rainure (24) comprise entre lesdites surfaces et destinée à recevoir lesdits câbles (17) ; ladite rainure (24) étant située en correspondance avec ledit appendice (7), ledit appendice étant en outre pourvu d'un connecteur (8) disposé axialement et réalisant le raccordement électrique entre une bobine (16) du capteur de mesure et l'unité locale de traitement du véhicule.

2. Coquille selon la revendication 1, caractérisée en ce que le corps annulaire (6) est pourvu d'une languette (25) faisant saillie vers l'extérieur, à proximité de la bague tournante (14) du palier, en vue de protéger ledit dispositif de mesure de vitesse.

3. Coquille selon la revendication 1, caractérisée en ce qu'elle comprend deux demi-coquilles (10, 11), de préférence réalisées en matière plastique, dont la demi-coquille la plus interne (11), l'appendice radial (7) et le connecteur axial (8) forment un ensemble monobloc.

4. Coquille selon la revendication 1, caractérisée en ce que le corps annulaire (6), l'appendice radial (7) et le connecteur axial (8) sont réalisés en une seule pièce emboutie à la presse.
